# EUROPÄISCHE PATENTSCHRIFT

(11) **EP 2 770 307 B1**
(45) Veröffentlichungstag und Bekanntmachung des Hinweises auf die Patenterteilung: **27.04.2016**
(21) Anmeldenummer: 14151569.2
(22) Anmeldetag: 17.01.2014
(51) Int. Cl.: G01F 23/292

(54) **Optoelektronischer Füllstandssensor und Verfahren zur Bestimmung eines Füllstands eines Mediums in einem Behälter**
Optoelectronic fill level sensor and method for determination of a fill level of a medium in a container
Capteur de niveau de remplissage optoélectronique et procédé de détermination d'un niveau de remplissage d'un fluide dans un récipient

(30) Priorität: 26.02.2013 DE 102013101890
(43) Veröffentlichungstag der Anmeldung: 27.08.2014
(73) Patentinhaber: SICK AG, 79183 Waldkirch (DE)
(72) Erfinder: Weber, Thomas, 77960 Seelbach (DE); Sonntag, Dennis, 76571 Gaggenau (DE); Meier, Xaver, 77978 Untertal (DE)
(74) Vertreter: Hehl, Ulrich

(56) Entgegenhaltungen:
- EP-A1- 2 315 045
- DE-A1- 3 601 442
- DE-A1-102005 019 233

## Beschreibung

Die Erfindung betrifft einen optoelektronischen Füllstandssensor, insbesondere einen Laserscanner, und ein Verfahren zur Bestimmung eines Füllstands eines Mediums in einem Behälter nach dem Oberbegriff von Anspruch 1 beziehungsweise 11. Für die Füllstandsmessung einer Flüssigkeit in einem Behälter sind verschiedene Verfahren bekannt. Soweit nicht mechanische Lösungen beispielsweise mit einem Schwimmer zum Einsatz kommen, basieren Füllstandssensoren in der Regel auf einem Signallaufzeitverfahren, bei dem ein Signal gegen die Oberfläche der Flüssigkeit ausgesandt und aus dessen Laufzeit auf den Abstand geschlossen wird. Die Signallaufzeitverfahren unterscheiden sich dabei vor allem in der Art des Signals.

Das Signal wird teilweise mittels einer Sonde geführt, welche in die Flüssigkeit hineinragt. Das gängige Verfahren mit einer Sonde ist die beispielsweise in EP 2 012 098 A1 erläuterte Zeitbereichsreflektometrie (TDR, Time Domain Reflectometry), in der die Laufzeit eines geführten Mikrowellenpulses gemessen wird. Ein optisches Verfahren mit einer Lichtleitersonde wird in EP 2 418 315 A2 beschrieben. Eine Art Lichtsonde bildet auch eine rotierende Bildsensorzeile, die gemäß einer kurz erwähnten Ausführungsform der DE 199 19 925 A1 zur Füllstandsmessung von Schnittgut um 180° oder 360° um die Achse eines Silos gedreht wird.

Die Verwendung einer Sonde ist nur möglich, wenn die Flüssigkeit die Sonde nicht angreift und umgekehrt die Sonde beispielsweise in Lebensmittelanwendungen mit entsprechenden Hygieneanforderungen keine unerwünschten Ablagerungen ansammelt. Ansonsten wird eine berührungslose Messung bevorzugt, in der das Signal frei abgestrahlt und wieder empfangen wird. Gängig sind hier vor allem Radarsensoren und Ultraschallsensoren. Radarsensoren sind vergleichsweise teuer, unterliegen Störungen durch die Behältergeometrie und weisen Totzonen am Behälterrand auf. Ultraschallsensoren reagieren empfindlich auf Umgebungsbedingungen wie Temperatur, Luftfeuchtigkeit, Druck sowie Lärm und Maschinengeräusche. Störschichten wie Gasblasen oder Schaum können überdies den Ultraschall absorbieren.

Eine Alternative bieten hier berührungslose optische Verfahren, weil sie ganz andere Abhängigkeiten zeigen als Radar oder Ultraschall. Bekannt sind Extinktionsmessungen, die aber Kenntnisse über die physikalisch-chemischen Eigenschaften der Flüssigkeit erfordern und für Schüttgüter, Pasten oder stark eingetrübte Flüssigkeiten ungeeignet sind.

Analog zum Radar kann auch mit Licht anhand einer Lichtlaufzeit ein Abstand bestimmt werden, was manchmal als LIDAR (Light Detection and Ranging) bezeichnet wird. Misst man aber mit einem entsprechenden Lichttaster den Abstand zur Oberfläche der Flüssigkeit, so ergibt sich ein Problem, wenn das Licht nicht senkrecht auf die Oberfläche trifft und deshalb der Lichttaster die gerichtete, spiegelnde Reflexion oder Direktreflexion nicht empfängt. Ein solcher Lichttaster muss demnach sehr exakt ausgerichtet bleiben und verliert bei unruhigen Oberflächen mit Wellenbildung das Signal der spiegelnden Reflexion. Bei trüben Flüssigkeiten kann noch eine ungerichtete, diffuse Reflexion ausgewertet werden, aber bei klaren Flüssigkeiten ist der Sensor dann nicht mehr messfähig. Wenn sich Unebenheiten oder Wellen der zu vermessenden Oberfläche sogar noch mit der Zeit verändern, trifft der Messstrahl selbst bei korrekter Montage nicht oder nur noch teilweise den Empfänger. Ein ähnliches Problem ergibt sich allgemein bei der optischen Abstandsmessung zu spiegelnden Objekten. Einstrahlige optische Sensoren können in diesen Anwendungen für eine robuste Messung nicht eingesetzt werden. Es ist denkbar, den Messstrahl stark aufzuweiten, um über einen größeren Flächenanteil zu mitteln und selbst bei ungünstigen Bedingungen zumindest ein Teilsignal zu empfangen. Auch das löst das Problem aber nur teilweise.

In der US 8 159 660 B2 wird eine pulsbasierte Lichtlaufzeitbestimmung zur Füllstandsmessung beschrieben. Dabei wird eine Reihe von Maßnahmen zur Verbesserung der Messung beschrieben. Zunächst wird über eine Vielzahl von Messungen gemittelt, um ein besseres Signal-Rausch-Verhältnis zu gewinnen. Die Auflösung der akquirierten Signalverläufe wird durch versetzte Abtastung (interleaved sampling) erhöht. Der reflektierte Puls wird dann mittels Funktionsfits einer erwarteten Pulsform in dem Signalverlauf erkannt, um über den Empfangszeitpunkt in dem Signalverlauf mit einer höheren Auflösung als die Abtastrate zu interpolieren. Der Funktionsfit hilft auch, den an der Oberfläche des Mediums reflektierten Puls von Reflexionen an Dunst oder Staub im Behälter zu unterscheiden, die eine breitere Pulsform zeigen. Auch ein Reflex vom Behälterboden kann anhand von dessen bekannter Pulsform eliminiert werden. Sämtliche Messinformation, die nicht dem an der Oberfläche reflektierten Puls zugeordnet werden kann, wird demnach in der US 8 159 660 B2 einfach verworfen. In einer Ausführungsform werden Abstände zur Oberfläche des Mediums nicht nur in senkrechter, sondern in weiteren Richtungen bestimmt. Unter anderem wird hierfür ein Scanmechanismus erwähnt. Das dient dann aber nur dazu, eine konkave oder konvexe Oberflächenform eines Schüttguts ortsaufgelöst zu erfassen.

Nach der US 8 302 473 B2 werden Sender und Empfänger eines lichtlaufzeitmessenden Sensors V-förmig angeordnet. Das ändert nichts an dem Problem, dass bei Dejustage oder Wellenbildung das Signal nicht mehr im Empfänger ankommt.

DE 10 2005 019 233 A1 bildet einen Laserscanner dahingehend weiter, dass im Umlaufbereich des Strahls ein Umlenkspiegel in Form eines innenverspiegelten Mantelteilabschnitts eines Kegelstumpfes angeordnet wird. Damit bildet der Abtaststrahl eine kegelförmige Schutzglocke um eine sicherheitstechnisch zu überwachende Maschine. Dringt ein Objekt oder eine Person in die Schutzglocke ein, so wird dies erkannt und die Maschine aus Sicherheitsgründen stillgesetzt. Dieser Laserscanner ist nicht für eine Füllstandsmessung geeignet, da Lichtlaufzeiten ausschließlich zu dem Zweck bestimmt werden, unzulässige Eingriffe in die Schutzglocke zu erkennen. Dazu muss auch jeder für einen bestimmten Winkel ausgesandte Abtaststrahl einzeln ausgewertet werden. Eine gemeinsame Bewertung mehrerer Abtaststrahlen zur Bestimmung eines Abstandswertes verbietet sich aus sicherheitstechnischer Sicht, da hierbei ein kritischer Eingriff übersehen werden könnte.

Die DE 36 01 442 A1 offenbart eine Vorrichtung zum Abtasten von Objekten, bei der ein Lichtstrahl mittels einer Ablenkeinheit auf das abzutastende Objekt geworfen und dann in Reflexion oder Transmission ausgewertet wird. Die Ablenkeinheit besteht aus einem Drehspielgel und einem umgebenden Hohlspiegel, so dass der von dem Drehspiegel abgelenkte Strahl erneut umgelenkt wird und auf einem abzutastenden Objekt einen Kreis beschreibt.

In der EP 2 315 045 A1 wird ein Signallaufzeitverfahren zum Messen einer Entfernung oder Entfernungsänderung vorgestellt, das in einem Laserscanner eingesetzt werden kann.

Es ist daher Aufgabe der Erfindung, eine verbesserte optische Füllstandsmessung zu ermöglichen.

Diese Aufgabe wird durch einen optoelektronischen Füllstandssensor und ein Verfahren zur Bestimmung eines Füllstands eines Mediums in einem Behälter nach Anspruch 1 beziehungsweise 11 gelöst. Dabei geht die Erfindung von dem Grundgedanken aus, ein zu vermessendes Objekt mit einem Sendelichtstrahl abzutasten und dabei mittels eines Lichtlaufzeitverfahrens den Abstand zu bestimmen. In einer wichtigen Anwendung wird der Sensor oberhalb eines Mediums in einem Behälter derart montiert, dass dessen Sendelichtstrahl im Wesentlichen nach unten auf die Oberfläche des Mediums fällt. Aufgrund der Abstandsmessung kann aus der bekannten Montagehöhe des Sensors und Geometrie des Behälters ein Füllstand berechnet werden.

Der Sensor tastet im ersten Schritt der Betrachtung mit dem Sendelichtstrahl nach Art eines Laserscanners einen Überwachungsbereich in Form einer Scanebene ab. Dazu ist eine erste Ablenkeinheit vorgesehen, die eine periodische Bewegung vollzieht. Im Unterschied zu einem herkömmlichen Laserscanner erfolgt anschließend mittels einer zweiten Ablenkeinheit eine erneute Ablenkung aus der Scanebene heraus in den Behälter hinein, so dass der jeweilige Sendelichtstrahl senkrecht oder zumindest in spitzem Winkel auf die Oberfläche des Mediums fällt. Gewisse Abweichungen aus der Senkrechten sind also denkbar und zum Ausgleich von Wellen oder Verkippungen unter Umständen sogar nützlich. Es erfolgt so eine Abstandsmessung bezüglich einer Vielzahl von Messpunkten, um zusätzliche Messinformation zu gewinnen. Durch gemeinsame Auswertung an diesen Messpunkten wird die Messung eines einzigen Abstands- oder Füllstandswerts überbestimmt und dadurch robust gegen Störeinflüsse wie Dejustage oder Wellenbildung. Im Prinzip sollten für die gemeinsame Bewertung alle verfügbaren Messpunkte genutzt werden. Dennoch sind auch Berücksichtigungen nur eines Teils der Messpunkte möglich, etwa zur Reduzierung des Auswertungsaufwands oder weil einige Messpunkte als besonders zuverlässig oder besonders unzuverlässig klassifiziert werden können. Unter einem Messpunkt soll natürlich kein mathematischer Punkt verstanden werden, denn die Ortsauflösung ist durch den Querschnitt des Sendelichtstrahls festgelegt. Eine gewisse Ausdehnung der Messpunkte führt zu einem sogar hilfreichen Mittelungseffekt.

Die Erfindung hat den Vorteil, dass der Abstand für jegliches optisch erkennbare Medium messbar ist, also spiegelnde Oberflächen, trübe wie klare Flüssigkeiten, Gase, sofern sie eine optisch erkennbare Grenzfläche bilden, Schüttgüter, Pasten und dergleichen. Dies gilt auch für Schaum, der durch Radar, Mikrowellen oder Ultraschall wegen eines zu geringen Unterschiedes in der dielektrischen Konstante beziehungsweise Schalldämpfung nicht oder zumindest nur sehr schwer erfassbar wäre. Hygieneanforderungen und aggressive oder abrasive Medien sind wegen der berührungslosen Messung unproblematisch. Da mehrere Abtaststrahlen auftreffen, ist die Wahrscheinlichkeit extrem gering, dass nicht zumindest einige Reflexionen auch an einer spiegelnden, unebenen Objektfläche erfasst werden können. Das gilt auch bei Verunreinigungen durch Tröpfchen oder dergleichen, die einen Teil der Sendelichtstrahlen betreffen. Der erfindungsgemäße Sensor misst deshalb genau und äußerst robust.

Je nach Orientierung des Sensors sowie Formgebung und Positionierung der zweiten Ablenkeinheit ergeben sich unterschiedliche Alternativen. In einer erfindungsgemäßen Ausführungsform bildet die Scanebene zumindest in etwa eine Horizontalebene des Behälters. Die zweite Ablenkeinheit umgibt aufgrund ihrer Formgebung die auf einer Mittelachse angeordnete erste Ablenkeinheit und lenkt den Sendestrahl so nach unten ab. Dabei ruht die zweite Ablenkeinheit drehfest bezüglich des Sensors und vollzieht somit die periodische Bewegung der ersten Ablenkeinheit nicht mit. Denkbar wäre aber auch, die zweite Ablenkeinheit als kleines Spiegelelement in dem optischen Pfad der ersten Ablenkeinheit anzuordnen und mitzubewegen. Eine solche zweite Ablenkeinheit ist umlaufend im wörtlichen Sinn, eine ruhende zweite Ablenkeinheit dagegen im Sinne der Formgebung. In beiden Fällen ist der eigentliche Überwachungsbereich des Sensors nicht die Scanebene, sondern die quer zu der Scanebene ausgebildete Mantelfläche des periodisch scannenden und zweifach abgelenkten Sendelichtstrahls. Für eine Füllstandsmessung interessant ist nicht die Mantelfläche selbst, sondern deren Schnittlinie mit der Oberfläche des Mediums, in welcher der Sensor ein Abstandsprofil der Oberfläche erfasst.

In einer alternativen erfindungsgemäßen Ausführungsform wird der Sensor mit seiner Scanebene vertikal zu der Oberfläche des Mediums orientiert. In einigen Abtastwinkeln der periodischen Bewegung der ersten Ablenkeinheit trifft dann der Sendelichtstrahl ohne zweite Ablenkung auf die Oberfläche. Die zweite Ablenkeinheit umgibt die erste Ablenkeinheit für die seitlichen und rückwärtigen Abtastwinkel und sorgt dafür, dass auch hier der Sendelichtstrahl auf die Oberfläche umgelenkt wird.

Die Auswertungseinheit ist bevorzugt dafür ausgebildet, aus den Abständen an den Messpunkten ein Abstandsprofil zu bilden und den gemeinsamen Abstandswert aus dem Abstandsprofil zu bestimmen. Bei diesem Abstandsprofil handelt es sich somit um eine Funktion des jeweils gemessenen Abstands in Abhängigkeit des Ortes. Je nach Ausführungsform der zweiten Ablenkeinheit wird der Ort durch eine einfache Linie oder eine zumindest topologische Kreislinie beschrieben. Bei perfekt justiertem Sensor, ebener Oberfläche und fehlerfreien Abstandsmessungen wird das Abstandsprofil flach und zeigt in jedem Punkt den Füllstand an. Dementsprechend erlaubt das tatsächlich gemessene Abstandsprofil viele Rückschlüsse auf die Messumstände. Die gemeinsame Auswertung sorgt dafür, dass ein genauer Abstandswert auch unter realen Messbedingungen gefunden wird.

Die Auswertungseinheit ist bevorzugt dafür ausgebildet, in dem Abstandsprofil eine Verkippung des Sensors zu erkennen und bei der Bestimmung des gemeinsamen Abstandswertes zu kompensieren. Eine Verkippung des Sensors sorgt für eine entsprechende Verkippung des Abstandsprofils. Diese kann geschätzt und rechnerisch rückgängig gemacht werden. Dabei ist zu beachten, dass durch eine Verkippung nicht nur symmetrisch einige Werte des Abstandsprofils überhöht und andere zu niedrig sind, was bereits durch Mittelwertbildung kompensiert würde. Die Verkippung sorgt vielmehr auch für einen systematischen Fehler, der trigonometrisch anhand des geschätzten Verkippungswinkels korrigiert werden kann.

Die Auswertungseinheit ist bevorzugt dafür ausgebildet, in dem Abstandsprofil Unebenheiten einer Oberfläche des Mediums zu erkennen und bei der Bestimmung des gemeinsamen Abstandswertes zu kompensieren. Das Abstandsprofil lässt neben einer Verkippung des Sensors auch Unebenheiten in der abgetasteten Oberfläche erkennen. Sind diese Unebenheiten zufällig verteilt, genügt wiederum eine Mittelwertbildung über das Abstandsprofil oder die Zeit. Es könnte sich aber auch um systematische Abweichungen handeln, bei denen die Messpunkte nicht ausreichend repräsentativ für die Oberfläche sind. Beispielsweise kann erkannt werden, dass wegen einer besonders ausgeprägten Wellenflanke ein bestimmter Messpunkt gar nicht zu einer Direktreflexion geführt haben kann und deshalb bei einer gemeinsamen Bewertung unberücksichtigt bleiben sollte. Ein Wellenbild kann auch in der Zeit verfolgt werden, um die Erkennung und Kompensation weiter zu verbessern.

Die Auswertungseinheit ist bevorzugt dafür ausgebildet, den gemeinsamen Abstandswert als Mittelwert der Abstände an den mehreren Messpunkten zu bestimmen. Dadurch werden mit wenig Rechenaufwand zufällig in Ort beziehungsweise Zeit verteilte Abweichungen kompensiert.

Die zweite Ablenkeinheit ist bevorzugt als innen verspiegelter Hohlkörper ausgebildet. Aus optischer Sicht genügt ein schmaler Ring oder Mantelabschnitt in der mittels der ersten Ablenkeinheit abgetasteten Scanebene. Konstruktiv wird ein Hohlkörper mit mehr Fläche bevorzugt, der leichter gehaltert werden und eine Gehäusefunktion übernehmen kann. Bei dem Hohlkörper handelt es sich bevorzugt um einen Abschnitt eines Rotationskörpers wie eines Hohlkegelstumpfes oder eines Paraboloids. Wenn in der Scanebene für einen Auftreffwinkel von 45° gesorgt wird, treten die Sendelichtstrahlen gerade senkrecht aus und man kann die meisten Direktreflexionen und damit eine optimale Messung erreichen. Allgemein ist aber die Form und Neigung der zweiten Ablenkeinheit praktisch beliebig variierbar, weil die genaue Form der Schnittlinie mit der Oberfläche des Mediums für die Abstandsmessung eine untergeordnete Rolle spielt und zumindest geringe Winkelabweichungen aus der Senkrechten immer noch die Erfassung einer Direktreflexion ermöglichen. Eine Rotationssymmetrie ist also nicht zwingend, und ebenso muss die zweite Ablenkeinheit nicht über den Vollwinkel von 360° umlaufen, sondern deckt möglicherweise nur einen Winkelbereich ab. Das gilt auch insbesondere bei Montage des Sensors mit vertikal ausgerichteter Scanebene, wo in einigen Winkelbereichen die Sendelichtstrahlen auch ohne zweite Ablenkung in die gewünschte Richtung austreten.

Die zweite Ablenkeinheit weist bevorzugt Unebenheiten auf. Dies führt zu einer Variation des Winkels, in dem der Sendelichtstrahl austritt und auf eine ebene Oberfläche auftrifft. Damit erhöht sich die Wahrscheinlichkeit, dass auch bei Fehlausrichtung oder welligem Medium zumindest einige Sendelichtstrahlen senkrecht auftreffen und direkt zum Sensor reflektiert werden. Eine weitere Möglichkeit, variierende Auftreffwinkel zu erreichen, besteht darin, die erste Ablenkeinheit mit Spiel in ihrer periodischen Bewegung zu versehen.

Die zweite Ablenkeinheit weist bevorzugt ein konvexes, lichtdurchlässiges Abtropfelement auf, welches im optischen Pfad des Sendelichtstrahls der zweiten Ablenkeinheit nachgeordnet ist. Das Abtropfelement wird beispielsweise als Kegel geformt. Ein derartiges Abtropfelement wird mit seiner Wölbung nach unten zu dem Medium hin ausgerichtet, so dass Kondensat und Spritzer der Wölbung folgen und sich in einem Bereich außerhalb von Durchtrittsbereichen des Sendelichtstrahls sammeln beziehungsweise dort abtropfen. Da das Abtropfelement gerade die optisch empfindlichen Stellen schützen soll, ist unvermeidlich, dass der Sendelichtstrahl und das zurückgeworfene Licht das Abtropfelement transmittieren. Deshalb wird vorzugsweise das Abtropfelement für das Licht möglichst unsichtbar gestaltet, beispielsweise durch entsprechende Vergütungen zur Unterdrückung von Teilreflexionen an den optischen Grenzflächen. So wird insgesamt die Messung durch das Abtropfelement gegenüber Kondensation und Tröpfchenbildung robuster.

Die zweite Ablenkeinheit ist bevorzugt außen auf den Sensor aufgesetzt. Sie bildet dann eine Art Haube und ist vorzugsweise Teil des Gehäuses. Alternativ kann die zweite Ablenkeinheit aber auch innerhalb des Gehäuses verbaut werden.

Die Auswertungseinheit ist bevorzugt für einen Einlernvorgang ausgebildet, in dem bei leerem Behälter eine Leerkurve als Referenz für im Betrieb bestimmte Abstände oder Abstandsprofile ermittelt wird. Die Leerkurve wird beispielsweise durch Differenzbildung mit den gemessenen Abständen beziehungsweise dem Abstandsprofil berücksichtigt. Da in dem Einlernvorgang keine Ansprechzeit beachtet werden muss, kann die Leerkurve über eine große Zahl von Messvorgängen gemittelt werden, um Rauscheffekte zu unterdrücken.

Zu einem Füllstandswert tragen unterschiedliche Messinformationen alternativ oder gemeinsam bei. Der Abstand zu der Oberfläche wird unmittelbar ausgemessen, wenn dort der Sendelichtstrahl zurückgeworfen wird. Bei klaren Flüssigkeiten oder Objekten mit spiegelnder Oberfläche gibt es aber keine diffuse Remission in alle Richtungen gemäß dem Lambertschen Gesetz, sondern nur eine gerichtete spiegelnde Reflexion, die hier Direktreflexion genannt wird. Diese Direktreflexion wiederum wird nur empfangen, wenn der Sendelichtstrahl senkrecht auf die Oberfläche auftrifft. Erfindungsgemäß wird unter beinahe allen denkbaren Bedingungen sichergestellt, dass solche Direktreflexionen tatsächlich erfasst werden können.

Bei einer Abweichung von den Bedingungen für eine Direktreflexion wird in einem klaren oder durchsichtigen Medium stattdessen eine Behälterreflexion von Boden oder Wänden des Behälters empfangen. Diese Behälterreflexion kann ebenfalls für eine Berechnung des Füllstands genutzt werden. Der Boden und die vom Medium bedeckten Wände des Behälters erscheinen nämlich wegen der geringeren Lichtgeschwindigkeit in dem Medium für den Sensor weiter entfernt. Bei bekannter Behältergeometrie und in Kenntnis der verzögerten Lichtgeschwindigkeit kann deshalb auch aus dem gemessen Abstand des Bodens und der Wände auf den Füllstand geschlossen werden. Diese Füllstandsmessung aus einer Behälterreflexion kann herangezogen werden, wenn trotz der zweiten Ablenkeinheit keine Direktreflexion identifiziert werden sollte, und kann ansonsten vornehmlich zur Plausibilisierung und Korrektur eines aus einer Direktreflexion bestimmten Füllstandes genutzt werden.

Die Auswertungseinheit ist bevorzugt dafür ausgebildet, Direktreflexionen als positive Werte nach Differenzbildung der jeweiligen Abstände mit einer Leerkurve zu erkennen. Denn Behälterreflexionen würden dazu führen, dass scheinbar größere Entfernungen gemessen werden als innerhalb des Behälters physisch möglich, und sind deshalb nach Differenzbildung negativ.

Die Auswertungseinheit ist bevorzugt dafür ausgebildet, aus dem Empfangssignal eine jeweilige Intensität zu den mehreren Messpunkten zu bestimmen und den Füllstand als mit den Intensitäten gewichteten Mittelwert der Abstände bei den Direktreflexionen zu bestimmen. Die Intensitäten bieten für jeden Messpunkt neben dem Abstand eine zusätzliche Messinformation. Je größer die Intensität ist, desto verlässlicher kann auch der gemessene Abstand als Füllstandsmessung gewertet werden. Dies wird durch eine entsprechend gewichtete Mittelung bei der Bestimmung des gemeinsamen Abstandswerts erfasst. Alternativ kann aber auch unmittelbar und gleichgewichtet über alle Abstände oder nur über Direktreflexionen gemittelt werden.

Die Auswertungseinheit ist bevorzugt dafür ausgebildet, einen Abstand größer als einen durch die Geometrie des Behälters vorgegebenen Maximalabstand als Behälterreflexion zu erkennen. Ein solcher Abstand ist sicherlich nicht aufgrund einer Direktreflexion gemessen worden, da das Medium physisch nicht weiter beabstandet sein kann als der Behälter. Wurden die gemessenen Abstände durch Differenzbildung mit der Leerkurve kompensiert, so werden die entsprechenden Abstandswerte negativ und so schnell erkannt. Durch die geringere Lichtgeschwindigkeit im Medium ist der Behälter scheinbar weiter weggerückt. Messwerte, die als Behälterreflexion erkannt sind, scheiden als Kandidaten für eine Direktreflexion aus und können gesondert ausgewertet werden. Dies ist also die Umkehrung der Bedingung für eine Direktreflexion.

Die Auswertungseinheit ist bevorzugt dafür ausgebildet, anhand von mindestens einer Direktreflexion und mindestens einer Behälterreflexion den Brechungsindex des Mediums zu berechnen. Aus dem durch die Direktreflexion gemessenen Abstand der Oberfläche des Mediums ist nämlich die tatsächliche Länge des Lichtwegs durch das Medium bekannt, und aus der Behälterreflexion der scheinbare Abstand. Aus dem Verhältnis ergibt sich unter Berücksichtigung des Brechungsindex' Eins von Luft die Verzögerung der Lichtgeschwindigkeit und damit auch die optische Dichte beziehungsweise der Brechungsindex des Mediums.

Die Auswertungseinheit ist bevorzugt dafür ausgebildet, den Füllstand aus einer Behälterreflexion und dem Brechungsindex des Mediums zu bestimmen. Der Brechungsindex bestimmt den Faktor, um den die Lichtgeschwindigkeit in dem Medium verzögert ist, und damit kann aus in der Behälterreflexion erfassten scheinbaren Verschiebung von Behälterwand oder -boden auf den Füllstand geschlossen werden, sofern die tatsächliche Geometrie des Behälters parametriert oder in einer Leermessung bestimmt wurde. Ebenso kann der Brechungsindex parametriert, vorab oder in einer Situation gemessen werden, in der sowohl Direktreflexionen als auch Behälterreflexionen erfasst werden.

Die Auswertungseinheit ist bevorzugt dafür ausgebildet, eine Verunreinigung im optischen Pfad bis zu einer Oberfläche des Mediums daran zu erkennen, dass bei einem Messpunkt außerhalb einer Direktreflexion der Abstand kleiner ist als ein durch die Geometrie vorgegebener Mindestabstand. Solche Verunreinigungen werden insbesondere von Kondensat oder Beschlag an einer Frontscheibe des Füllstandssensors beziehungsweise an dessen zweiter Ablenkeinheit oder deren Schutz verursacht. Sie werden erkannt, weil außerhalb einer Direktreflexion nicht wie erwartet der bezüglich der Lichtlaufzeit nach hinten verschobene Behälter gemessen wird. Sie werden alternativ auch erkannt, weil Abstände gemessen werden, die kleiner sind als ein derzeit plausibler Füllstand, beispielsweise sprunghaft kleiner als die letzte Messung oder sogar kleiner als bei einem maximalen Füllstand. Ein zweiter Test kann anhand der Intensität erfolgen, wenn diese nämlich zu schwach für eine Direktreflexion an der Oberfläche des Mediums, aber zu nahe für eine Behälterreflexion ist. Wurde an einem Messpunkt eine Verunreinigung erkannt, so wird der zugehörige Abstand nicht für den gemeinsamen Abstandswert berücksichtigt. Man kann außerdem durch die Verunreinigungen bedingte Laufzeitverzögerung korrigieren.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Blockdarstellung eines Laserscanners, der als Füllstandssensor eingesetzt wird;
- Fig. 2: eine Ansicht der Abtaststrahlen eines Laserscanners zur Veranschaulichung der Vorteile einer zweiten Ablenkeinheit;
- Fig. 3: eine schematische Übersichtsdarstellung einer Ausführungsform eines optoelektronischen Sensors zur Füllstandsmessung, der über einem Medium in einem Behälter montiert ist;
- Fig. 4a-b: eine dreidimensionale Ansicht und eine Draufsicht auf eine zweite Ablenkeinheit des Sensors gemäß Figur 3;
- Fig. 5: eine schematische Übersichtsdarstellung einer weiteren Ausführungsform eines optoelektronischen Sensors zur Füllstandsmessung, der über einem Medium in einem Behälter montiert ist;
- Fig. 6: eine dreidimensionale Ansicht einer zweiten Ablenkeinheit des Sensors gemäß Figur 5;
- Fig. 7: eine Ansicht der Abtaststrahlen eines Laserscanners in einer weiteren Ausführungsform eines optoelektronischen Sensors zur Füllstandsmessung;
- Fig. 8: ein beispielhafter ortsabhängiger Intensitätsverlauf und ein zugehöriges Abstandsprofil jeweils als Leer- und Messkurve;
- Fig. 9: ein mit einer Leerkurve korrigierter ortsabhängiger Intensitätsverlauf und ein zugehöriges Abstandsprofil; und
- Fig. 10: ein weiteres Beispiel eines ortsabhängigen Intensitätsverlaufs und eines zugehörigen Intensitätsprofils jeweils als Leer- und Messkurve für den Fall eines Mediums mit einer darüber befindlichen Störschicht.

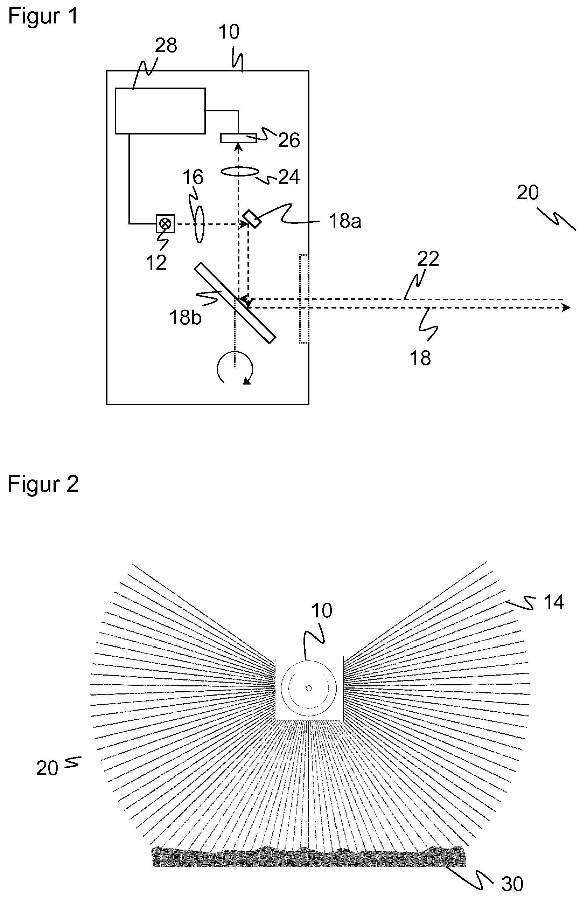

Figur 1 zeigt eine Blockdarstellung eines Laserscanners 10, der als Füllstandssensor eingesetzt wird. Ein Lichtsender 12, beispielsweise eine Laserlichtquelle, sendet einen Sendelichtstrahl 14 aus, der durch eine Sendeoptik 16 kollimiert und über eine Ablenkeinheit 18a-b in eine Abtast- oder Scanebene 20 gelenkt wird. Nach Reflexion oder Remission in der Scanebene 20 kehrt Empfangslicht 22 zu dem Laserscanner 10 zurück, wird von der Ablenkeinheit 18b über eine Empfangsoptik 24 auf einen Lichtempfänger 26 geführt und dort in ein elektrisches Empfangssignal gewandelt. Eine Auswertungseinheit 28 bestimmt aus dem Empfangssignal eine Lichtlaufzeit, um den Abstand zu einem Messpunkt zu ermitteln, an dem der Sendelichtstrahl 14 reflektiert oder remittiert wurde. Lichtlautzeitverfahren an sich, beispielsweise Pulsverfahren mit Aussenden von kurzen Lichtpulsen und Bestimmen eines Empfangszeitpunktes des reflektierten Lichtpulses oder Phasenverfahren mit Bestimmen einer Phasenverschiebung zwischen amplitudenmoduliertem Sendelicht und dem resultierenden Empfangslicht, werden als bekannt vorausgesetzt. Die entsprechende Auswertung erfolgt zumeist digital nach einer nicht dargestellten A/D-Wandlung, wobei auch analoge und gemischte Verfahren mit analoger Vorverarbeitung genutzt werden.

Die beispielsweise als Spiegel ausgebildete Ablenkeinheit 18a-b ist drehbar gelagert, so dass der Sendelichtstrahl 14 periodisch über die Scanebene 20 geführt wird. Dabei ist die drehbare Einheit mit der Ablenkeinheit 18a-b mit einem nicht gezeigten Encoder versehen, so dass die Winkellage stets bekannt ist. Auf diese Weise gewinnt der Laserscanner 10 anhand der Winkellage und der Lichtlaufzeiten Abstandsprofile. Es sind abweichende Aufbauten von Laserscannern bekannt, beispielsweise mit einem drehbaren Spiegelpolygonrad oder einem insgesamt drehbaren Optikkopf, die von der Erfindung ebenfalls umfasst sind.

Figur 2 zeigt sehr schematisch eine denkbare Anordnung eines Laserscanners 10 zur Bestimmung des Abstands zu einer Oberfläche 30. Die aus den in Winkelschritten ausgesandten Sendelichtstrahlen 14 gebildete Scanebene 20 ist vertikal zu der Oberfläche 30 ausgerichtet. In einem oberen, aus Sicht des Laserscanners 10 rückwärtigen Winkelbereich entsteht baubedingt eine Abtastlücke, wobei abweichend auch Laserscanner mit 360°-Erfassung bekannt sind. Wie unmittelbar erkennbar, kann ein großer Teil der Sendelichtstrahlen 14 für die Abstandsmessung schon deshalb nicht genutzt werden, weil die Oberfläche 30 gar nicht getroffen wird. Wenn die Oberfläche 30 außerdem spiegelt, gelangt ein weiterer Teil der Reflexionen nicht zum Laserscanner 30 zurück. Bei entsprechend starker Spiegelung kann unter Umständen nur der eine bei 0° senkrecht auftreffende Sendelichtstrahl 14 ausgewertet werden, beziehungsweise bei ungünstigen Unebenheiten auf der Oberfläche 30 im Extremfall gar keiner.

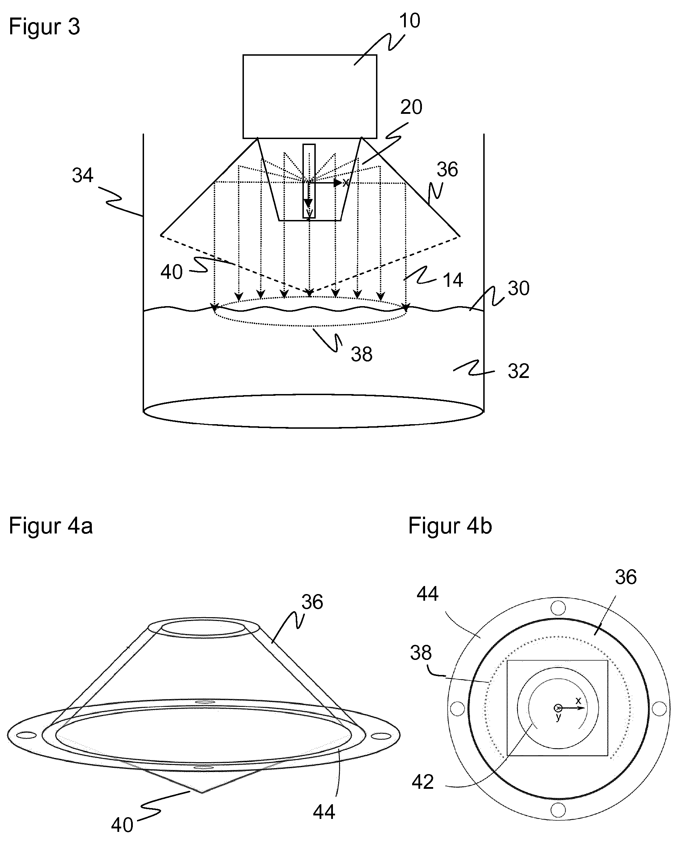

Figur 3 zeigt eine schematische Übersichtsdarstellung einer Ausführungsform eines Laserscanners 10, der zur Füllstandsmessung über einem Medium 32 in einem Behälter 34 montiert ist. Der Laserscanner 10 misst den Abstand zu der Oberfläche 30 des Mediums 32, woraus mit Hilfe der bekannten Anbringhöhe des Laserscanners der Füllstand resultiert. Der Laserscanner 10 ist mit seiner Scanebene 20 in einer Horizontalebene des Behälters 34, also im Wesentlichen parallel zu der Grenzschicht oder Oberfläche 30 montiert, ohne das Medium 32 zu berühren.

Eine zweite Ablenkeinheit 36 lenkt die Sendelichtstrahlen 14 aus der Scanebene 20 heraus und in Richtung auf die Oberfläche 30 um. Dadurch treffen die Sendelichtstrahlen 14 jeweils zumindest nahezu senkrecht auf die Oberfläche 30 auf. Sie bilden dabei eine Kreislinie 38, in der sich die von den zweifach abgelenkten Sendelichtstrahlen 14 gebildete Mantelfläche und die Oberfläche 30 schneiden. Die zweite Ablenkeinheit 36 hat demnach zwei für die Abstandsmessung positive Effekte: Alle Sendelichtstrahlen 14 über den gesamten Winkelbereich des Laserscanners 10 können für die Messung verwendet werden, und die Sendelichtstrahlen 14 treffen zudem in einem für eine Abstandsmessung an einer spiegelnden Oberfläche 30 vorteilhaften zumindest nahezu senkrechten Winkel auf.

Die zweite Ablenkeinheit 36 weist auf ihrer Unterseite einen optionalen Abtropfkegel 40 auf. Dadurch werden der optische Pfad und insbesondere die zweite Ablenkeinheit 36 selbst von Wassertröpfchen, Schmutz und ähnlichem geschützt. Flüssigkeiten laufen aufgrund von Schwerkraft und Adhäsion zur Spitze des Abtropfkegels 40, die nicht im Sichtfeld des Laserscanners 10 liegt, und tropfen dort ab.

Die zweite Ablenkeinheit 36 mit dem Abtropfkegel 40 ist in Figur 4a noch einmal getrennt in einer dreidimensionalen Ansicht und in Figur 4b in einer Draufsicht auf den Laserscanner 10 und das Medium 32 gezeigt. Die zweite Ablenkeinheit 36 ist in dieser Ausführungsform als Hohlkegelstumpf geformt, der auf seiner Innenseite verspiegelt ist und eine um 45° geneigte Mantelfläche aufweist. Die Sendelichtstrahlen 14 werden bei dieser Geometrie und Anordnung gerade senkrecht abgelenkt, und die Kreislinie 38 entspricht dem nach unten projizierten Auftreffbereich der Sendelichtstrahlen 14 auf die zweite Ablenkeinheit 36. Dadurch werden alle Sendelichtstrahlen 14 zueinander parallel ausgerichtet und für die Abstandsmessung nutzbar gemacht. Wie Figur 4b illustriert, erfasst der Laserscanner 10 nicht den Vollwinkel von 360°, sondern nur einen gewissen Teilwinkelbereich 42. Dementsprechend ist auch die Kreislinie 38 nicht vollständig geschlossen.

Der Abtropfkegel 40 wird beispielsweise mittels eines Flanschbereichs 44 mit der zweiten Ablenkeinheit 36 an deren Unterseite verbunden. Es handelt sich hier um einen Hohlkegel, im Gegensatz zu der dargestellten zweiten Ablenkeinheit 36 einschließlich der Kegelspitze, der kopfüber angeordnet wird, damit Kondensat und Tröpfchen sich an der Spitze sammeln. Anstelle einer Kegelform eignet sich prinzipiell jegliche insbesondere konvexe Form, die ein Abfließen von Tröpfchen unterstützt. Da die Sendelichtstrahlen 14 den Abtropfkegel transmittieren, wird dieser lichtdurchlässig und möglichst dünn gestaltet. Der Kegelwinkel ist so gewählt, dass störende Reflexionen an dem Abtropfkegel 40 nicht detektiert werden. Vorzugsweise werden derartige Reflexionen durch Vergütung und geeignete Winkel von vorne herein zumindest weitgehend unterdrückt.

Das in Figur 3 dargestellte senkrechte Auftreffen aller Sendelichtstrahlen 14 auf die Oberfläche 30 ist zwar theoretisch optimal. Wenn aber sämtliche Sendelichtstrahlen 14 parallel und damit gleich zueinander ausgerichtet sind, ergibt sich eine gewisse Anfälligkeit gegenüber Störungen, wie Unebenheiten der Oberfläche 30 oder Fehljustierungen des Sensors 10. Deshalb kann es vorteilhaft sein, bei mindestens einigen Sendelichtstrahlen 14 gezielt für Abweichungen aus der Senkrechten zu sorgen. Dieser Effekt kann auf vielfältige Weise erreicht werden. Beispiele sind Abweichungen des Kegels von einem 45°-Winkel, dessen leicht verkippte Montage gegenüber der Scanebene 20, Unebenheiten auf der Innenfläche der zweiten Ablenkeinheit 36 oder ein Spiel in der Bewegung der ersten Ablenkeinheit 18a-b. Dadurch wird eine statistische Verteilung erzeugt, die zumindest für einige, wenn nicht den Großteil der Sendelichtstrahlen 14 eine Direktreflexion und Registrierung in dem Laserscanner 10 gewährleistet.

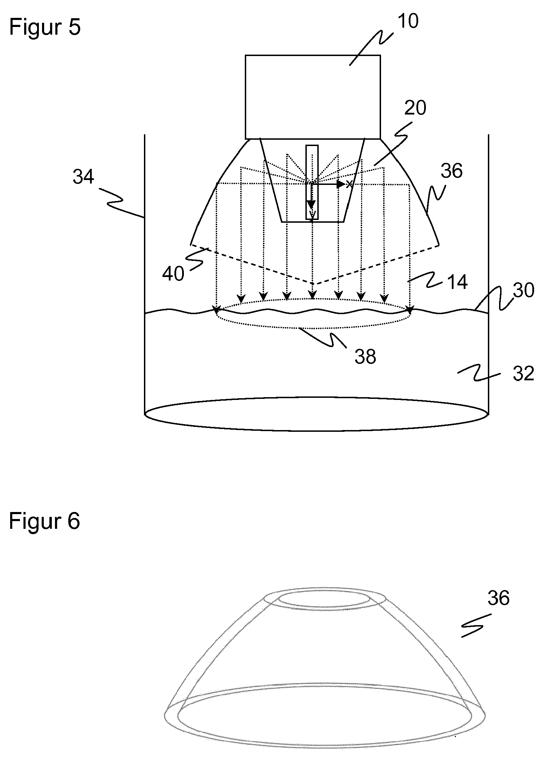

Figur 5 zeigt eine schematische Übersichtsdarstellung einer weiteren Ausführungsform eines Laserscanners 10 zur Füllstandsmessung. Diese Ausführungsform unterscheidet sich in der Formgebung der zweiten Ablenkeinheit 36, die in Figur 6 noch einmal getrennt und ohne Abtropfkegel 40 dreidimensional gezeigt ist. Mit dieser als Paraboloid ausgestalteten zweiten Ablenkeinheit soll illustriert werden, dass auch mit anderen Formen als einem Kegelstumpf der gewünschte Effekt der Auslenkung von Sendelichtstrahlen 14 auf die Oberfläche 30 erzielbar ist.

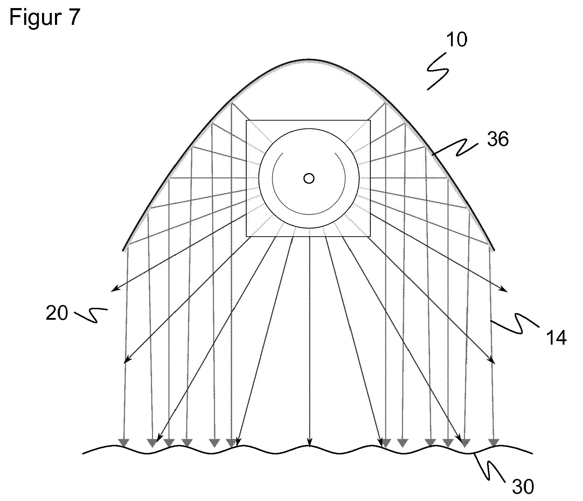

Figur 7 zeigt eine Ansicht der Sendelichtstrahlen 14 eines Laserscanners 10 in einer weiteren Ausführungsform eines optoelektronischen Sensors zur Füllstandsmessung. Erneut ist die zweite Ablenkeinheit 36 als Paraboloid geformt. Im Unterschied zu den Ausführungsformen gemäß den Figuren 3 und 5 wird dieser Laserscanner 10 aber mit seiner Scanebene 20 vertikal zu der Oberfläche 30 ausgerichtet. Die zweite Ablenkeinheit 36 sorgt dafür, dass die seitlichen und rückwärtigen Sendelichtstrahlen 14 genutzt werden können, die in einer Anordnung gemäß Figur 2 für eine Messung verloren gehen würden. Auch diese zweite Ablenkeinheit 36 kann mit Unebenheiten versehen werden, damit die zweifach abgelenkten Sendelichtstrahlen 14 nicht genau senkrecht auftreffen, sondern in ihrem Auftreffwinkel auf die Oberfläche 30 variieren. Ein gewisses Spektrum an Auftreffwinkeln bieten hier aber bereits die vorderen Sendelichtstrahlen 14, die nicht von der zweiten Ablenkeinheit 36 abgelenkt werden. Bei diesen vorderen Sendelichtstrahlen 14 ist noch zu beachten, dass die gemessenen Abstände einen durch die Winkelstellung der ersten Ablenkeinheit 18a-b bedingten Abstandsanteil parallel zu der Oberfläche 30 enthalten. Dies kann durch eine Projektion auf das Lot zu der Oberfläche 30 anhand der jeweils bekannten Winkelstellung korrigiert werden. Ebenso sollten in allen Ausführungsformen etwaige differierende Abstandsanteile korrigiert werden, die durch unterschiedliche Weglängen des optischen Pfades innerhalb der Scanebene 20 aufgrund der Geometrie und Anordnung der zweiten Ablenkeinheit 36 entstehen. Beispielsweise haben in Figur 7 die obersten Sendelichtstrahlen 14 einen kürzeren Weg zu der zweiten Ablenkeinheit, was sich natürlich nicht auf den gemessenen Füllstand auswirken sollte und beispielsweise durch eine Differenzbildung mit einer Leerkurve oder Rückrechnen der geometrischen Gegebenheiten kompensiert wird.

Zusätzliche Messpunkte lassen sich dadurch gewinnen, dass die erste Ablenkeinheit 18 zusätzlich zu ihrer Drehbewegung periodisch verkippt wird. Damit entstehen bei den Ausführungsformen gemäß den Figuren 3 und 5 Kreislinien 38 mit unterschiedlichem Radius und Auftreffwinkel und bei der Ausführungsform gemäß Figur 7 mehrere zueinander versetzte Scanlinien auf der Oberfläche 30.

Das Ergebnis der Abstandsbestimmung ist in allen beschriebenen Ausführungsformen zunächst eine Vielzahl von Abstandswerten an unterschiedlichen Messpunkten. Die Messung wird so überbestimmt, wenn im Endeffekt nur ein Abstands- oder Füllstandswert gesucht ist. Deshalb findet in der Auswertungseinheit 28 jeweils eine gemeinsame Bewertung der Abstandswerte statt, die in einer Mittelung bestehen kann. Als Referenz erfolgt vorzugsweise eine Einlernphase beziehungsweise eine Kalibrierung, in der eine Leerkurve bei leerem Behälter 34 erfasst und als Referenz gespeichert wird. Die Leerkurve kann selbst über viele Messungen gemittelt werden, um Rauscheffekte zu unterdrücken.

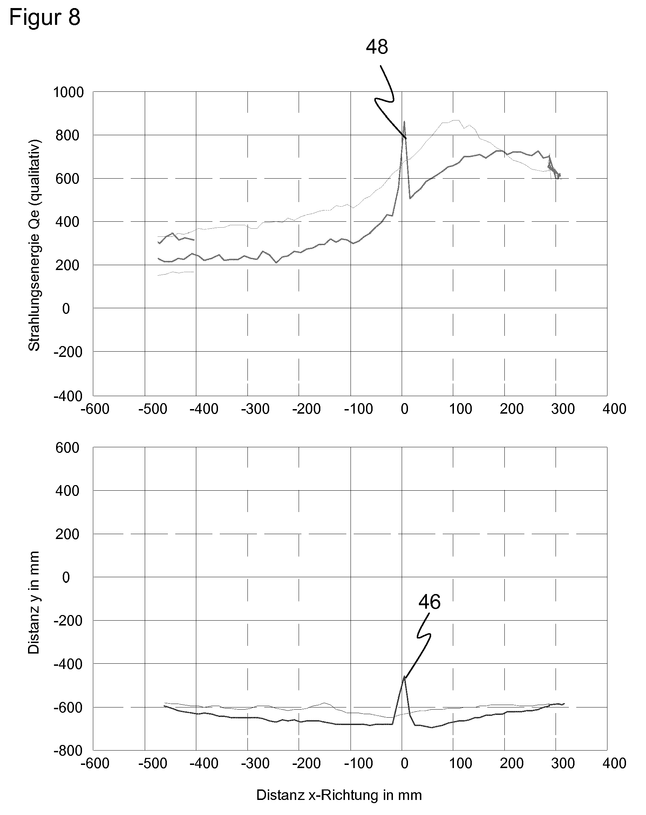

Figur 8 zeigt im unteren Teil ein beispielhaftes Abstandsprofil, das in diesem Fall längs einer Linie auf der Oberfläche 30 bestimmt wurde, wie sie auch von einer Ausführungsform eines Laserscanners gemäß Figur 7 mit senkrecht orientierter Scanebene 20 erzeugt würde. Dabei wurden die Winkelschritte des Sensors 10 auf der X-Achse in eine Position umgerechnet. Bei einer Ausführungsform gemäß Figur 4 oder 6, in der von der zweiten Ablenkeinheit 36 sämtliche Sendelichtstrahlen 14 senkrecht ausgerichtet werden, spielt der jeweilige Winkel der Abtastung keine besondere Rolle mehr, ein vergleichbares Diagramm würde nur noch durch Randbedingungen variierende, aber an sich gleichwertige Abstandsmessungen ergeben.

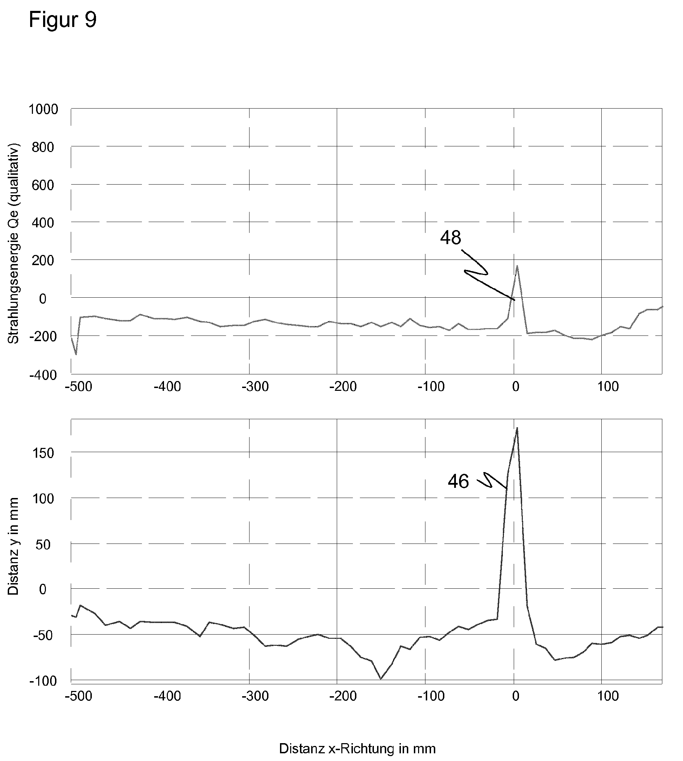

Im oberen Teil zeigt Figur 8 zugehörige Intensitätswerte, d.h. die jeweilige Amplitude des von dem Lichtempfänger 26 erzeugten Empfangssignals bei der Reflexion oder Remission, aus welcher der Abstandswert bestimmt wurde. Sowohl im oberen als auch im unteren Teil der Figur 8 sind jeweils mit durchgezogenen Linien die eigentlichen Messkurven und mit gestrichelten Linien eine vorab in einer Leerkalibration bei leerem Behälter 34 bestimmte Leerkurve als Referenz dargestellt. Figur 9 zeigt ganz entsprechend zu Figur 8 die durch die Leerkurve korrigierten Messkurven, konkret als Differenz zwischen jeweiliger Messkurve und Leerkurve.

Die Auswertungseinheit 28 erkennt eine gerichtete Reflexion oder Direktreflexion dort, wo die Abstandswerte größer sind als während der Leerkalibrierung, d.h. bei positiven Werten in dem korrigierten Abstandsprofil gemäß Figur 9. Der Abstandswert einer Direktreflexion kann unmittelbar als eine Füllstandsmessung verwertet werden. In Figur 9 zeigt sich ein sehr deutliches Maximum 46 bei 0°, also senkrecht auftreffenden Sendelichtstrahlen 14. Direktreflexionen können bei entsprechenden Unebenheiten der Oberfläche 30 auch bei anderen Winkeln auftreffen.

Ein weiteres Kriterium ist die Intensität gemäß dem oberen Teil der Figuren 8 und 9. Pulse höherer Intensität haben einen größeren Signal-Rausch-Abstand und liefern deshalb genauere Messergebnisse. Auch in dem Intensitätsverlauf zeigt sich ein deutliches Maximum 48 bei 0°, was die Erkennung der senkrechten Direktreflexion bei diesem Winkel nochmals stützt. Eine weitere Möglichkeit, die Messinformation der Intensität zu berücksichtigen, ist eine mit der Intensität gewichtete Mittelung der Abstände von Direktreflexionen. Damit wird der höheren Messgenauigkeit an Messpunkten mit hoher Intensität Rechnung getragen.

Es enthalten aber nicht nur Messpunkte eine Füllstandsinformation, in denen eine Direktreflexion erkannt wird. Wenn das Medium 32 diffus remittiert, gelangt auch ohne Direktreflexion Licht zum Lichtempfänger 26. Da dennoch jeweils in den Winkeln mit Direktreflexion die Remission maximal ist, kann dieser Fall weitgehend gleichbehandelt werden wie die Direktreflexion. Interessanter ist der Fall eines klaren oder durchsichtigen Mediums 32. Hier stammt das erfasste Signal in Winkeln ohne Direktreflexion von den Wänden oder dem Boden des Behälters 34. Solche Winkel werden durch die gezielte Ausrichtung mit der zweiten Ablenkeinheit 36 vergleichsweise selten, sind aber immer noch möglich, etwa bei entsprechender Wellenbildung oder im Falle der Ausführungsform gemäß Figur 7 für Sendelichtstrahlen 14, welche die zweite Ablenkeinheit 36 nicht treffen.

Anstelle des negativen Kriteriums, dass Behälterreflexionen überall dort auftreten, wo es keine Direktreflexion gibt, lässt sich auch positiv definieren, dass Behälterreflexionen negativen Werten der Abstandsprofile nach Korrektur durch die Leerkurven entsprechen. An sich sind negative Werte nicht denkbar, denn der Behälter 34 begrenzt die maximal gemessenen Abstände. Grund für solche Messwerte ist eine in dem Medium 32 verringerte Lichtgeschwindigkeit.

Ist folglich bekannt, wie stark das Medium 32 die Lichtgeschwindigkeit verzögert, so kann aus den Behälterreflexionen ebenfalls der Füllstand berechnet werden. Dabei ist wie bei den Direktreflexionen auch hier eine Mittelung über Behälterreflexionen von mehreren Winkeln denkbar.

Der notwendige Korrekturfaktor für die Verzögerung der Lichtgeschwindigkeit folgt aus der optischen Dichte beziehungsweise dem Brechungsindex des Mediums 32 und gegebenenfalls aus Geometrieeigenschaften des Behälters 34, etwa wenn dieser keinen ebenen Boden aufweist. Der Korrekturfaktor kann vorab parametriert oder eingelernt werden. Es ist aber auch möglich, diesen Korrekturfaktor zu berechnen, nämlich in einer Situation, in der sowohl Direktreflexionen als auch Behälterreflexionen aufgenommen wurden. Dann wird die Messung des Füllstands aus Behälterreflexionen quasi mit dem aus den Direkreflexionen bekannten Füllstand umgekehrt, um den Korrekturfaktor aufzufinden.

Somit ergeben sich aus den Messdaten des Sensors 10 unter Umständen zwei Messungen für den Füllstand, nämlich aus Direktreflexionen und Behälterreflexionen. Solange eine Direktreflexion erkannt werden kann, was die zweite Ablenkeinheit 36 in aller Regel gewährleistet, sollte vorzugsweise der Füllstand maßgeblich hierauf basieren, weil der Messwert genauer ist als derjenige, der aus Behälterreflexionen bestimmt wird. Wenn aber keine Direktreflexion erkannt wird, beispielsweise wegen eines besonders ungünstigen Wellenbildes, wird stattdessen der aus Behälterreflexionen bestimmte Füllstandswert verwendet. Außerdem kann der zweite Füllstandswert aus Bodenreflexionen stets zur Plausibilisierung oder Korrektur des Füllstandswerts aus Direktreflexionen genutzt werden.

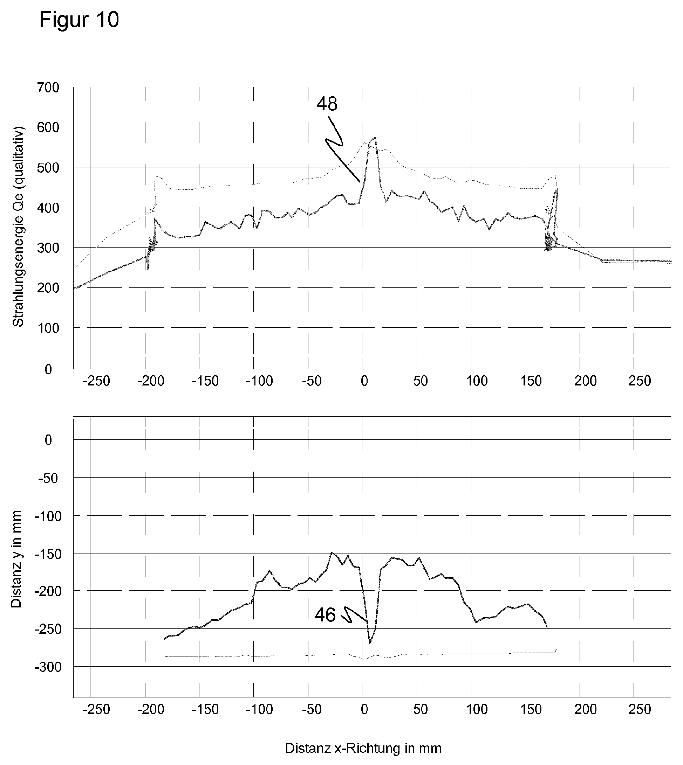

Figur 10 zeigt noch ein weiteres Beispiel eines Abstandsprofils und zugehöriger Intensitätswerte ähnlich den Figuren 8 und 9. Bei dieser Messung befand sich oberhalb des Mediums 32 eine Störschicht, beispielsweise Schaum auf dem Medium 32 oder Tröpfchenbildung beziehungsweise Kondensat auf einer Frontscheibe des Sensors 10. Dadurch wird die Messung gestört, und Abstandswerte werden auch außerhalb von Direktreflexionen größer als während der Leerkalibration. Zugleich sind die zugehörigen Intensitätswerte kleiner als während der Leerkalibration. In einem solchen Fall sind die Werte außerhalb von Direktreflexionen keine Behälterreflexionen und unbrauchbar. Die Füllstandsmessung sollte deshalb in diesem Fall allein auf den Direktreflexionen basieren. Die Messdaten der Störschicht lassen sich aber optional noch verwenden, um Art und Dicke der Störschicht zu schätzen und damit die Lichtlaufzeit in der Direktreflexion zu korrigieren.

Die Erfindung betrifft eine Füllstandsmessung. Der Sensor 10 kann aber in gleicher Weise auch für die Bestimmung des Abstands zu einer beliebigen anderen Oberfläche 30 eingesetzt werden. Das ist vor allem dann vorteilhaft, wenn die Oberfläche 30 spiegelnde Eigenschaften hat, wie Metalle und insbesondere Bleche, und aufgrund von Unebenheiten oder einer schrägen Orientierung des Sensors 10 eine Direktreflexion nicht ohne Weiteres erfasst wird. Ein Beispiel ist die Durchhangregelung eines auf einer Fördereinrichtung bewegten Blechs, das zwischen zwei Walzen U-förmig durchhängt, dabei aber ein gewisses Ausmaß des Durchhängens einhalten soll. Auch hierbei ergibt sich eine spiegelnde Oberfläche, die anwendungsbedingt nicht eben ausgebildet ist und deren Abstand dennoch mit dem Laserscanner 10 zuverlässig erfasst werden kann.

## Patentansprüche

1. Optoelektronischer Füllstandssensor (10), insbesondere Laserscanner, zur Bestimmung eines Füllstands eines Mediums (32) in einem Behälter (34), wobei der Sensor (10) einen Lichtsender (12) zum Aussenden eines Sendelichtstrahls (14) in einen Überwachungsbereich (20, 34), eine bewegliche erste Ablenkeinheit (18a-b) zur periodischen Ablenkung des Sendelichtstrahls (14), eine umlaufende zweite Ablenkeinheit (36) zum erneuten Ablenken des periodisch abgelenkten Sendelichtstrahls (14), einen Lichtempfänger (26) zum Erzeugen eines Empfangssignals aus an Messpunkten (38) in dem Überwachungsbereich (20, 34) zurückgeworfenem Licht (22) sowie eine Auswertungseinheit (28) aufweist, die dafür ausgebildet ist, aus dem Empfangssignal mit Hilfe eines Lichtlaufzeitverfahrens den jeweiligen Abstand zu den Messpunkten (38) zu bestimmen, **dadurch gekennzeichnet,**
**dass** die Auswertungseinheit (28) weiterhin dafür ausgebildet ist, aus den Abständen an mehreren Messpunkten (38) einen gemeinsamen Abstandswert zu bestimmen.

2. Sensor (10) nach Anspruch 1,
wobei die Auswertungseinheit (28) dafür ausgebildet ist, aus den Abständen an den Messpunkten (38) ein Abstandsprofil zu bilden und den gemeinsamen Abstandswert aus dem Abstandsprofil zu bestimmen.

3. Sensor (10) nach Anspruch 2,
wobei die Auswertungseinheit (28) dafür ausgebildet ist, in dem Abstandsprofil eine Verkippung des Sensors (10) zu erkennen und bei der Bestimmung des gemeinsamen Abstandswertes zu kompensieren.

4. Sensor (10) nach Anspruch 2 oder 3,
wobei die Auswertungseinheit (28) dafür ausgebildet ist, in dem Abstandsprofil Unebenheiten einer Oberfläche (30) des Mediums (32) zu erkennen und bei der Bestimmung des gemeinsamen Abstandswertes zu kompensieren.

5. Sensor (10) nach einem der vorhergehenden Ansprüche,
wobei die Auswertungseinheit (28) dafür ausgebildet ist, den gemeinsamen Abstandswert als Mittelwert der Abstände an den mehreren Messpunkten (38) zu bestimmen.

6. Sensor (10) nach einem der vorhergehenden Ansprüche,
wobei die zweite Ablenkeinheit (36) als innen verspiegelter Hohlkörper ausgebildet ist.

7. Sensor (10) nach einem der vorhergehenden Ansprüche,
wobei die zweite Ablenkeinheit (36) Unebenheiten aufweist.

8. Sensor (10) nach einem der vorhergehenden Ansprüche,
wobei die zweite Ablenkeinheit (36) ein konvexes, lichtdurchlässiges Abtropfelement (40) aufweist, welches im optischen Pfad des Sendelichtstrahls (14) der zweiten Ablenkeinheit (36) nachgeordnet ist.

9. Sensor (10) nach einem der vorhergehenden Ansprüche,
wobei die zweite Ablenkeinheit (36) außen auf den Sensor (10) aufgesetzt ist.

10. Sensor (10) nach einem der vorhergehenden Ansprüche,
wobei die Auswertungseinheit (28) für einen Einlernvorgang ausgebildet ist, in dem bei leerem Behälter (34) eine Leerkurve als Referenz für im Betrieb bestimmte Abstände oder Abstandsprofile ermittelt wird.

11. Verfahren zur Bestimmung eines Füllstands eines Mediums (32) in einem Behälter (34), bei dem ein Sendelichtstrahl (14) in einen Überwachungsbereich (20, 34) ausgesandt, zum Abtasten des Überwachungsbereichs (20, 34) an einer beweglichen ersten Ablenkeinheit (18a-b) und anschließend an einer umlaufenden zweiten Ablenkeinheit (36) in Richtung auf das Medium (32) abgelenkt wird, ein Empfangssignal aus an Messpunkten (38) auf einer Oberfläche (30) des Mediums (32) zurückgeworfenes Licht (22) erzeugt und aus dem Empfangssignal mit Hilfe eines Lichtlaufzeitverfahrens der jeweilige Abstand zu den Messpunkten (38) bestimmt wird,
**dadurch gekennzeichnet,**
**dass** aus den Abständen an mehreren Messpunkten (38) ein gemeinsamer Abstandswert und daraus der Füllstand bestimmt wird.

## Claims

1. An optoelectronic filling level sensor (10), in particular a laser scanner, for the determination of a filling level of a medium (32) in a container (34), wherein the sensor (10) comprises as light transmitter (12) for transmitting a transmission light beam (14) into a monitoring area (20, 32), a movable first deflection unit (18a-b) for periodically deflecting the transmission light beam (18), a circumferential second deflection unit (36) for again deflecting the periodically deflected transmission light beam (14), a light receiver (26) for generating a reception signal from light (22) reflected at measurement points (38) in the monitored area (20, 34) as well as an evaluation unit (28) which is configured to calculate the respective distance to the measurement points (38) from the reception signal based on a light time of flight method,
**characterized in that** the evaluation unit (34) is further configured to determine a common distance value from the distances at several measurement points (38).

2. The sensor (10) according to claim 1,
wherein the evaluation unit (28) is configured to form a distance profile from the distances at the measurement points (38) and to determine the common distance value from the distance profile.

3. The sensor (10) according to claim 2,
wherein the evaluation unit (28) is configured to detect a tilt of the sensor (10) in the distance profile and to compensate for the tilt in the determination of the common distance value.

4. The sensor (10) according to claim 2 or 3,
wherein the evaluation unit (28) is configured to detect an unevenness of a surface (30) of the medium (32) in the distance profile and to compensate for the unevenness in the determination of the common distance value.

5. The sensor (10) according to any of the preceding claims,
wherein the evaluation unit (28) is configured to determine the common distance value as an average of the distances at the several measurement points (38).

6. The sensor (10) according to any of the preceding claims,
wherein the second deflecting unit (36) is formed as an internally mirrored hollow body.

7. The sensor (10) according to any of the preceding claims,
wherein the second deflection unit (36) comprises unevenness.

8. The sensor (10) according to any of the preceding claims,
wherein the second deflection unit (36) comprises a convex, light-transmissive drip element (40) which is arranged downstream of the second deflection unit (36) in the optical path of the transmission light beam (14).

9. The sensor (10) according to any of the preceding claims,
wherein the second deflection unit (36) is externally fitted to the sensor (10).

10. The sensor (10) according to any of the preceding claims,
wherein the evaluation unit (28) is configured for a teach process where a blank curve is determined in the empty container (34) as a reference for distances or distance profiles detected during operation.

11. A method for determining the filling level of a medium (32) in a container (34)
wherein a transmission light beam (14) is transmitted into a monitoring area (20, 34), is deflected for scanning the monitoring area (20, 34) at a movable first deflection unit (18a-b) and subsequently at a circumferential second deflection unit (36) in the direction of the medium (32), a reception signal is generated from light (22) reflected at measurement points (38) on a surface (30) of the medium (32), and the respective distance to the measurement points (38) is determined from the reception signal based on a light time of flight method, **characterized in that** a common distance value is determined from the distances at several measurement points (38), and a filling level from that.

## Revendications

1. Capteur de niveau de remplissage optoélectronique (10), en particulier scanner à laser, pour déterminer un niveau de remplissage d'un milieu (32) dans un récipient (34), dans lequel le capteur (10) comprend un émetteur de lumière (12) pour émettre un rayon de lumière émise (14) dans une zone de surveillance (20, 34), une première unité de déflexion mobile (18a-b) pour défléchir périodiquement le rayon de lumière émise (14), une seconde unité de déflexion (36) en recirculation, pour défléchir à nouveau le rayon de lumière émise (14) périodiquement défléchi, un récepteur de lumière (26) pour engendrer un signal de réception à partir de la lumière (22) renvoyée à partir de points de mesure (38) dans la zone de surveillance (20, 34), ainsi qu'une unité d'évaluation (28) qui est réalisée pour déterminer, à partir du signal de réception et avec l'aide d'un procédé de temps de parcours de la lumière, la distance respective jusqu'au point de mesure (38),
**caractérisé en ce que**
l'unité d'évaluation (28) est en outre réalisée pour déterminer une valeur de distance commune à partir des distances au niveau de plusieurs points de mesure (38).

2. Capteur (10) selon la revendication 1,
dans lequel l'unité d'évaluation (28) est réalisée pour former un profil de distance à partir des distances au niveau des points de mesure (38) et pour déterminer la valeur de distance commune à partir du profil de distance.

3. Capteur (10) selon la revendication 2,
dans lequel l'unité d'évaluation (28) est réalisée pour reconnaître dans le profil de distance un basculement du capteur (10) et pour le compenser lors de la détermination de la valeur de distance commune.

4. Capteur (10) selon la revendication 2 ou 3,
dans lequel l'unité d'évaluation (28) est réalisée pour reconnaître dans le profil de distance des inégalités d'une surface (30) du milieu (32) et pour les compenser lors de la détermination de la valeur de distance commune.

5. Capteur (10) selon l'une des revendications précédentes,
dans lequel l'unité d'évaluation (28) est réalisée pour déterminer la valeur de distance commune à titre de valeur moyenne des distances au niveau des plusieurs points de mesure (38).

6. Capteur (10) selon l'une des revendications précédentes,
dans lequel la seconde unité de déflexion (36) est réalisée sous forme d'un corps creux spécularisé à l'intérieur.

7. Capteur (10) selon l'une des revendications précédentes,
dans lequel la seconde unité de déflexion (36) comporte des inégalités.

8. Capteur (10) selon l'une des revendications précédentes,
dans lequel la seconde unité de déflexion (36) comprend un élément d'égouttage (40) convexe et transparent, qui est agencé à la suite de la seconde unité de déflexion (36) dans le trajet optique du rayon de lumière émise (14).

9. Capteur (10) selon l'une des revendications précédentes,
dans lequel la seconde unité de déflexion (36) est posée à l'extérieur sur le capteur (10).

10. Capteur (10) selon l'une des revendications précédentes,
dans lequel l'unité d'évaluation (28) est réalisée pour un processus d'apprentissage dans lequel, lorsque le récipient (34) est vide, une courbe à vide est déterminée à titre de référence pour des distances ou des profils de distance déterminé(e)s en fonctionnement.

11. Procédé pour la détermination d'un niveau de remplissage d'un milieu (32) dans un récipient (34), dans lequel un rayon de lumière émise (14) est émis dans une zone de surveillance (20, 34), est défléchi au niveau d'une première unité de déflexion mobile (18a-b) et défléchi ensuite au niveau d'une seconde unité de déflexion (36) en recirculation, en direction du milieu (32) afin de palper la zone de surveillance (20, 34), un signal de réception est engendré à partir de la lumière (22) renvoyée au niveau de points de mesure (38) vers une surface (30) du milieu (32) et la distance respective jusqu'aux points de mesure (38) est déterminée à partir du signal de réception avec l'aide d'une procédure à temps de parcours de la lumière,
**caractérisé en ce qu'**une valeur de distance commune est déterminée à partir des distances au niveau de plusieurs points de mesure (38) et le niveau de remplissage est déterminé à partir de cette valeur de distance commune.
